# EUROPÄISCHE PATENTSCHRIFT

(11) **EP 1 798 090 B1**
(45) Veröffentlichungstag und Bekanntmachung des Hinweises auf die Patenterteilung: **29.07.2009**
(21) Anmeldenummer: 06025947.0
(22) Anmeldetag: 14.12.2006
(51) Int. Cl.: B60J 7/20

(54) **Hutablage eines Cabriolets**
Rear shelf for cabriolet
Plage arrière pour cabriolet

(30) Priorität: 14.12.2005 DE 102005060205
(43) Veröffentlichungstag der Anmeldung: 20.06.2007
(73) Patentinhaber: Webasto AG, 82131 Stockdorf (DE)
(72) Erfinder: Wegener, Fritz, 82205 Gilching (DE); Rieger, Gerhard, 70499 Stuttgart (DE)
(74) Vertreter: Konnerth, Dieter Hans

(56) Entgegenhaltungen:
- DE-A1- 10 039 683
- DE-A1- 19 714 105
- DE-C1- 4 311 240
- DE-C1- 10 154 731
- DE-U1- 29 812 165
- FR-A- 2 842 467

## Beschreibung

Die Erfindung betrifft eine Hutablage eines Cabriolets mit einem umwandelbaren Dach mit den Merkmalen des Oberbegriffs des Anspruchs 1.

Die DE 102 25 630 A1 offenbart eine gattungsgemäße Verdeckkastenabdeckung oder Hutablage eines Cabriolets mit einem vorderen Abdeckteil und einem hinteren Abdeckteil. Das vordere Abdeckteil ist mittels einer Lagerkonsole um eine karosseriefeste Schwenkachse zwischen einer horizontalen Abdeckstellung und einer hochgeschwenkten Zwischenstellung verstellbar und über ein mehrere Lenker enthaltendes Lenkergetriebe an einen Hauptlenker einer das Dach lagernden Dachmechanik sowie an eine Antriebseinrichtung der Dachmechanik angekoppelt, so dass die Verstellbewegung von der Antriebsbewegung der Antriebseinrichtung und der Schwenkbewegung des Hauptlenkers ausgeführt wird. Das hintere Abdeckteil ist mittels eines Stützhebels an der Lagerkonsole des vorderen Abdeckteils schwenkbar gelagert und ebenfalls über ein Lenkergetriebe mit dem Hauptlenker der Dachmechanik gekoppelt. Diese Anlenkung des hinteren Abdeckteils ist somit sehr aufwendig gestaltet. Bei geöffnetem abgelegtem Dach bilden die beiden Abdeckteile eine ebenflächige Abdeckung vor der Kofferraumklappe. Beim Verstellen das Daches zwischen seiner Schließstellung und seiner Ablagestellung sind die beiden Abdeckteils in ihrer gemeinsamen flächigen Stellung vertikal hochgeschwenkt, während bei geschlossenem Dach das vordere Abdeckteil seine Stellung als Hutablage unter dem hinteren Dachteil einnimmt und das hintere Abdeckteil vom vorderen Abdeckteil vertikal nach unten gerichtet ist.

Aus der DE 298 12 165 U1 ist ein Cabriolet mit einer gattungsgemäßen Abdeckung in der Art einer Hutablage bekannt geworden, die ein vorderes Abdeckteil und ein hinteres Abdeckteil aufweist. Das vordere Abdeckteil ist um eine Schwenkachse schwenkbar gelagert, die fahrzeugfest oder vertikal verschiebbar ist. Das hintere Abdeckteil ist mittels eines Viergelenks mit zwei Lenkern am vorderen Abdeckteil schwenkbar gelagert und für eine vorübergehende platzsparende Anordnung über das vordere Abdeckteil schwenkbar, bevor das Dach geöffnet und abgelegt wird. Das hintere Abdeckteil besitzt somit keine eigene Schwenklagerung an einer fahrzeugfesten Schwenkachse. Vielmehr kann das hintere Abdeckteil nur gemeinsam mit dem vorderen Abdeckteil und von diesem gesteuert um die Schwenkachse verschwenken.

Die DE 197 14 105 A1 offenbart ein Fahrzeug mit einem verlagerbaren Verdeck und einem Verdeckkastendeckel, der eine Verdeckklappe, die an ihrem hinteren Ende mittels eines Hebels an der Karosserie schwenkbar gelagert ist, und ein Mittelteil aufweist, das vor der Verdeckklappe angeordnet ist und mittels Drehlager an der Verdeckklappe bzw. seitlichen Stegen schwenkbar gelagert ist. Das Mittelteil oder vordere Abdeckteil wird somit zusammen mit der Verdeckklappe oder hinterem Abdeckteil verschwenkt.

Aus der DE 44 46 483 A1 ist eine Hutablage eines Cabriolets mit ablegbarem Dach bekannt geworden, die drei Abdeckteilen enthält, von denn das vordere Abdeckteil unverschwenkbar ist und die beiden anderen Abdeckteile schwenkbeweglich gelagert sind. Alle Abdeckteile sind mit einem gemeinsamen Gleitschlittenteil verbunden. Das vordere und das hintere verschwenkbare Abdeckteil sind über ein Schwenkgelenk miteinander verbunden, so dass sie beim Aufklappen in ihre Zwischenstellung mit ihren Unterseiten gegeneinander geschwenkt werden, wobei ihr gemeinsames Verschwenken über zwei miteinander verbundene Schwenklenker des Schwenkgelenks gesteuert ist.

Die DE 196 13 917 C2 offenbart eine Abdeckanordnung eines Verdeckkastens, die eine vordere und eine hintere Plattenabdeckung aufweist. Bei versenktem Dach liegen die beiden Platten flächenbündig vor dem geschlossenen Verdeckkastendeckel. Bei geschlossenem Dach ist die vordere Platte nach unten in den Verdeckkasten geschwenkt und die hintere Platte ist nach vorne in eine Stellung als Hutablage schiebeverlagert.

Der Erfindung liegt die Aufgabe zugrunde, eine eingangs genannte Hutablage zu schaffen, die hinsichtlich ihrer Funktionalität und Verstellbarkeit verbessert ist.

Die Aufgabe wird erfindungsgemäß durch eine Hutablage mit den Merkmalen des Anspruchs 1 gelöst.

Vorteilhafte Ausgestaltungen der Erfindung sind in den Unteransprüchen angegeben.

Bei dieser Lösung ist die orts- oder fahrzeugfeste Schwenklagerung des hinteren Abdeckteils besonders einfach und funktionssicher und sie bietet eine reine Schwenkbewegung des hinteren Abdeckteils, die nicht durch die Schwenkbewegung des vorderen Abdeckteils überlagert ist oder auf dieser basiert und die keine aufwendigen Lenkergetriebe oder dergleichen erfordert.

Gemäß einer bevorzugten Gestaltung ist vorgesehen, dass einerseits bei geöffnetem und abgesenktem Dach das vordere und das hintere Abdeckteil eine niveaugleiche Abdeckung, die auch als vordere Verdeckkastenabdeckung oder als Hutablage bezeichnet werden kann, bilden und dass andererseits bei geschlossenem Dach das vordere Abdeckteil eine Abdeckung in der Art einer Hutablage bildet, die die Durchtrittsöffnung des Daches abdeckt und am umlaufenden Unterrand des hinteren Dachteils innenseitig dicht anliegt, während das hintere Abdeckteil, das in dieser Stellung nicht als Hutablage benötigt wird, eine gegenüber dem vorderen Abdeckteil abgesenkte Schwenkstellung einnimmt, in der es insbesondere nahe unterhalb des Unter- oder Hinterrandes des hinteren Dachteils angeordnet ist. Dieser Schwenkwinkelunterschied kann bevorzugt z. B. etwa 10° bis 20° betragen.

Bei der diese beiden Lösungen verknüpfenden Gestaltung der Hutablage wird durch die fahrzeugfeste Schwenkachse der einfache Bewegungsablauf zum Verschwenken des hinteren Abdeckteils auch in die abgesenkte Stellung bei geschlossenem Dach ermöglicht.

Gemäß einer besonders bevorzugten Gestaltung ist das vordere Abdeckteil um eine fahrzeugfeste Schwenkachse verschwenkbar gelagert, die demnach auch eine betriebssichere Funktionsweise bei einfachem Lageraufbau bereitstellt.

Wenn das vordere Abdeckteil und das hintere Abdeckteil um eine gemeinsame fahrzeugfeste Schwenkachse schwenkbar gelagert sind, ist die erforderliche Lagerung besonders einfach zu gestalten, indem z. B. beide Abdeckteile an einem gemeinsamen Lagerzapfen oder Lagerbolzen gelagert sind. Jedoch kann auch bei einem Versatz der beiden Lagerachsen das gewünschte Bewegungsverhalten der beiden Abdeckteile erzielt werden.

Zweckmäßigerweise sind das vordere Abdeckteil und das hintere Abdeckteil mittels jeweiliger Lagerarme um ihre jeweilige Schwenkachse bzw. um die gemeinsame Schwenkachse verschwenkbar gelagert. Jedes Abdeckteil hat beidseits jeweils einen Lagerarm, an dem das Abdeckteil befestigt ist oder der auch einstückig mit dem Abdeckteil gebildet sein kann.

Vorzugsweise ist das vordere Abdeckteil mittels einer Betätigungseinrichtung verstellbar und das hintere Abdeckteil ist mittels einer Verstelleinrichtung verstellbar, die an die Betätigungseinrichtung angekoppelt und von dieser gesteuert ist. Die Betätigungseinrichtung kann einen eigenständigen Antrieb aufweisen oder sie ist an ein bewegbares Fahrzeugteil angekoppelt, z. B. an eine Dachkinematik, die das Dach zwischen seinen beiden Endstellungen verlagert und beispielsweise ein Hauptviergelenk mit einem Hauptlenker und einer Hauptsäule aufweist. So kann die Schwenkbewegung der Hauptsäule oder des Hauptlenkers, die beim Verlagern des Daches eine Schwenkbewegung von etwa 180° ausführen, zum Verstellen der Betätigungseinrichtung verwendet werden. Die Betätigungseinrichtung kann zusätzlich über zumindest eine weitere Stelleinrichtung zu betätigen sein. Die Verstelleinrichtung kann durch die Ankopplung an die Betätigungseinrichtung durch diese zwangsbetätigt sein, so dass durch eine mechanische Koppelung z. B. mittels eines Lenkergetriebes die erforderlichen Verstellbewegungen ausgeführt werden.

Gemäß einer weiteren bevorzugten Gestaltung der erfindungsgemäßen Hutablage ist ein Schwenkhebel der Verstelleinrichtung am vorderen Abdeckteil oder dessen Lagerarm in einem Gelenk schwenkbar gelagert, mit einem Ende am hinteren Abdeckteil oder dessen Lagerarm in einem Stelleingriff und an seinem bezüglich des Gelenks anderen Ende um eine verlagerbare Schwenkachse bewegbar. Die jeweilige Lage der verlagerbaren Schwenkachse bestimmt die Schwenkstellung und die Schwenkbewegung des hinteren Abdeckteils im Verhältnis zum vorderen Abdeckteil.

Des weiteren kann der Stelleingriff des Schwenkhebels mittels eines am Schwenkhebel gelagerten Eingriffsteils oder Gleiters erfolgt, das bzw. der an einer am Lagerarm vorgesehenen Führung, z. B. eine Kulisse oder ein Langloch, verschiebbar aufgenommen ist.

Zweckmäßigerweise ist vorgesehen, dass die beiden Abdeckteile bei koaxialer Anordnung der verlagerbaren Schwenkachse des Schwenkhebels zur gemeinsamen Schwenkachse der beiden Abdeckteile übereinstimmende Schwenkbewegungen ausführen und bei nicht koaxialer Anordnung der verlagerbaren Schwenkachse des Schwenkhebels zur gemeinsamen Schwenkachse der beiden Abdeckteile unterschiedliche Schwenkbewegungen ausführen, wobei die tatsächlichen Bewegungsverhältnisse von der während der Verstellbewegung verlagerbaren Schwenkachse bestimmt sind.

Gemäß einer bevorzugten Gestaltung ist vorgesehen, dass die verlagerbare Schwenkachse an einem Steuerhebel gebildet ist, der mittels eines an einer Steuerkulisse des Steuerhebels verschiebbar aufgenommenen ortsfesten Lagerteils bewegbar gelagert und mit einem Schwenkantriebsteil der Betätigungseinrichtung gekoppelt und von diesem verstellbar ist. Die verlagerbare Schwenkachse ist z. B. ein Stift oder ein Zapfen, der vom Steuerhebel seitlich absteht und in einem Langloch am Schwenkhebel in Eingriff ist, so dass hierin eine Ausgleichsbewegung des Stiftes oder Zapfens möglich ist.

Wenn die Betätigungseinrichtung einen um eine ortsfeste Schwenkachse schwenkbar gelagerten Übersetzungshebel aufweist, der einerseits mit dem vorderen Abdeckteil und andererseits über ein insbesondere längenveränderbares Element mit dem Schwenkantriebsteil der Betätigungseinrichtung, z. B. einem Antriebslenker, verbunden ist, so kann mittels dieses Übersetzungshebels eine Eingangsbewegung der Betätigungseinrichtung auf die erforderliche Ausgangsbewegung umgesetzt werden.

Zweckmäßigerweise ist das Schwenkantriebsteil der Betätigungseinrichtung mit einem das Dach bewegbar lagernden Lenker wie z. B. Hauptsäule oder Hauptlenker eines Viergelenks der Dachkinematik, zum gemeinsamen Verschwenken verbunden.

Wenn das längenveränderbare Element ein Federelement und insbesondere eine Gasdruckfeder ist, kann in einfacher Weise eine Antriebsbewegungsübertragung in unterschiedlichen Stellungen der Betätigungseinrichtung bzw. der beiden Abdeckteile erfolgen. Anstatt einer starren Kopplung und damit einer ständigen Bewegung der Hutablage während der Bewegung der Dachkinematik ermöglicht das federartig wirkende Element aufgrund seiner Anpassungsfähigkeit eine derartige Einstellung, dass beispielsweise die Hutablage ruht, während sich die Dachkinematik bewegt, oder dass die Hutablage z. B. von einer Betätigungseinrichtung verschwenkt werden kann, wenn die Dachkinematik ruht. Ein solches federartig wirkendes Element gestattet somit eine flexible Kopplung der Verstelleinrichtung der Hutablage mit der Dachkinematik mit einer geringen Anzahl von Bauteilen.

Nachfolgend wird die Hutablage anhand eines Ausführungsbeispiels unter Bezugnahme auf die Zeichnung näher erläutert. Es zeigt:
- Fig. 1: in einer Draufsicht einen Ausschnitt eines Cabriolets mit einem in Schließstellung angeordneten ablegbaren Dach, einer Hutablage und einer Kofferraumklappe;
- Fig. 2: in einer Draufsicht das Dach in einer Zwischenstellung beim Öffnungs- oder Schließvorgang;
- Fig. 3: in einer Seitenansicht ein Hauptlager der Dachverstellkinematik sowie eine Verstelleinrichtung der Hutablage, wobei das Dach geöffnet und abgelegt und die Hutablage in ihrer Abdeckstellung angeordnet ist;
- Fig. 4: in einer Schrägansicht das Hauptlager in der Stellung der Fig. 3;
- Fig. 5: in einer Schrägansicht die bezüglich der Fig. 4 gegenüberliegende Seite des Hauptlagers;

- Fig. 6: in einer Seitenansicht die Verstelleinrichtung der Hutablage in einer ersten Zwischenstellung beim Öffnen der Kofferraum- bzw. Verdeckklappe vor dem Schließen des Daches;
- Fig. 7: in einer Seitenansicht die maximal hochgeschwenkte Hutablage;
- Fig. 8: in einer Seitenansicht die Hutablage beim Zurückschwenken aus ihrer maximal hochgeschwenkten Stellung;
- Fig. 9: in einer Seitenansicht die Hutablage in einer weiteren Zwischenstellung beim Schließen des Daches, wobei das hintere Abdeckteil der Hutablage dem vorderen Abdeckteil voreilt;
- Fig. 10: in einer Seitenansicht die Hutablage in einer weiteren Zwischenstellung beim Schließen des Daches;
- Fig. 11: in einer Seitenansicht die Hutablage in einer weiteren Zwischenstellung beim Schließen des Daches;
- Fig. 12: in einer Seitenansicht die Hutablage in ihrer untersten Schwenkstellung während des Schließens des Daches; und
- Fig. 13: in einer Seitenansicht die Hutablage in ihrer Abdeckstellung bei geschlossenem Dach.

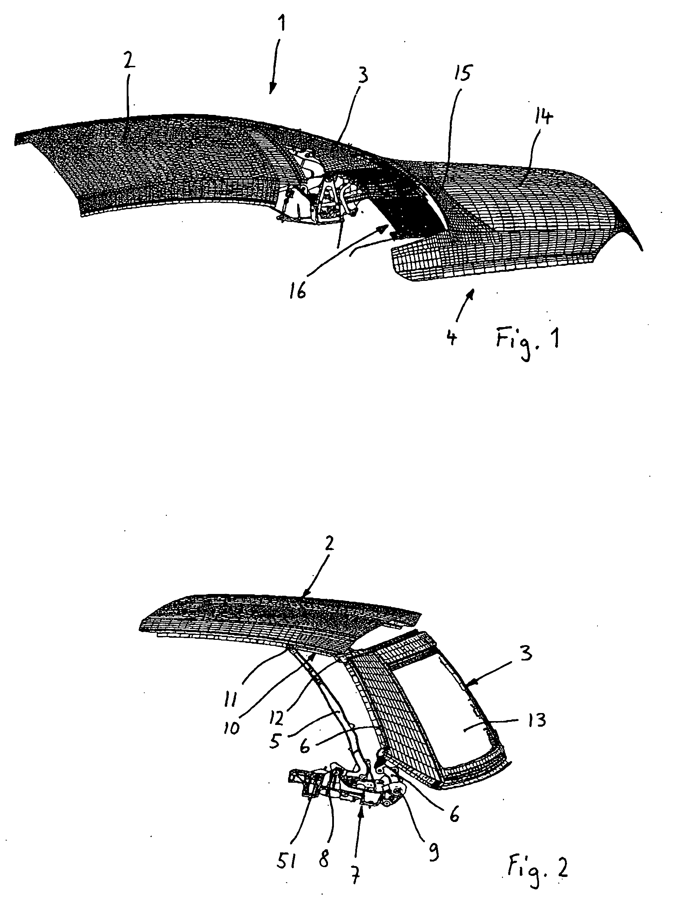

Ein Hardtop-Dach 1 eines Fahrzeugs enthält ein vorderes Dachteil 2 und ein hinteres Dachteil 3, die zwischen einer Schließstellung (Fig. 1) über dem Fahrzeuginnenraum und einer Offen- oder Ablagestellung, in der sie in einem heckseitigen Ablageraum oder Verdeckkasten 4 abgelegt sind, verstellbar sind. Ein solches Dach ist grundsätzlich aus der DE 199 36 252 C2 oder der US 6,866,324 B2 bekannt. Das Dach 1 ist zur Fahrzeuglängsachse mit beidseits gleichen Lager- und Antriebseinrichtungen im wesentlichen symmetrisch aufgebaut, so dass die Beschreibung des Daches 1 im wesentlichen anhand der Lager- und Antriebseinrichtungen an einer Seite erfolgt.

Das Dach 1 ist an der Karosserie mittels einer Lagereinrichtung in Gestalt z. B. eines Viergelenks bewegbar gelagert, das einen Hauptlenker 5 als vorderen Lenker und eine Hauptsäule 6 als hinteren Lenker aufweist, die einerseits an einem karosseriefesten Hauptlager 7 in Schwenkachsen 8 bzw. 9 schwenkbar gelagert und andererseits an einem Trägerteil 10 in Schwenkachsen 11 bzw. 12 schwenkbar angelenkt sind. An dem Trägerteil 10 ist das insbesondere hartschalige vordere Dachteil 2 befestigt.

Das Dach 1 ist gemäß dem dargestellten Ausführungsbeispiel ein bewegbares Hardtop, kann aber alternativ auch ein Faltverdeck oder flexibles Softtop mit einem faltbaren Verdeckgestänge sein. An das in Schließstellung des Daches 1 hintere Dachteil 3 oder C-Segment, das eine Heckscheibe 13 enthält, schließt sich eine Kofferraumklappe 14 an, die mittels einer Schwenklagereinrichtung (nicht dargestellt) um eine vordere Schwenkachse schwenkbar gelagert ist und zum Freigeben einer Beladeöffnung zum Be- und Entladen des Kofferraums an ihrem Hinterrand hochschwenkbar ist.

Die Kofferraumklappe 14, die auch den z. B. einen Teil des Kofferraums einnehmenden Ablageraum oder Verdeckkasten 4 abdeckt, ist mittels einer hinteren Lagereinrichtung um eine hintere Schwenkachse schwenkbar gelagert und wird mit ihrem Vorderrand 15 zum Freigeben einer Durchtrittsöffnung für das Dach 1 um diese Schwenkachse hochgeschwenkt, so dass das Dach 1 in den Verdeckkasten 4 abgelegt bzw. aus ihm ausgefahren werden kann. Beim Ablegen des beispielsweise zweiteiligen Hardtop-Daches 1 schwenkt z. B. das vordere Dachteil 2 gegenbombiert auf das hintere Dachteil 3 und alle Dachteile senken sich in den Verdeckkasten 4 ab.

Eine Abdeckung oder Hutablage 16 (Fig. 1 schematisch dargestellt, in Fig. 2 nicht dargestellt) erstreckt sich bei abgelegtem Dach 1 wesentlichen horizontal vor der Kofferraumklappe 14 und niveaugleich hierzu über einen Bereich, durch den sich das Dach 1 beim Öffnen und Schließen in den Verdeckkasten 4 bzw. aus ihm heraus bewegt, während bei geschlossenem Dach 1 die Abdeckung vor dem Unterrand des hinteren Dachteils 3 von einem Teil der Hutablage 16 gebildet ist.

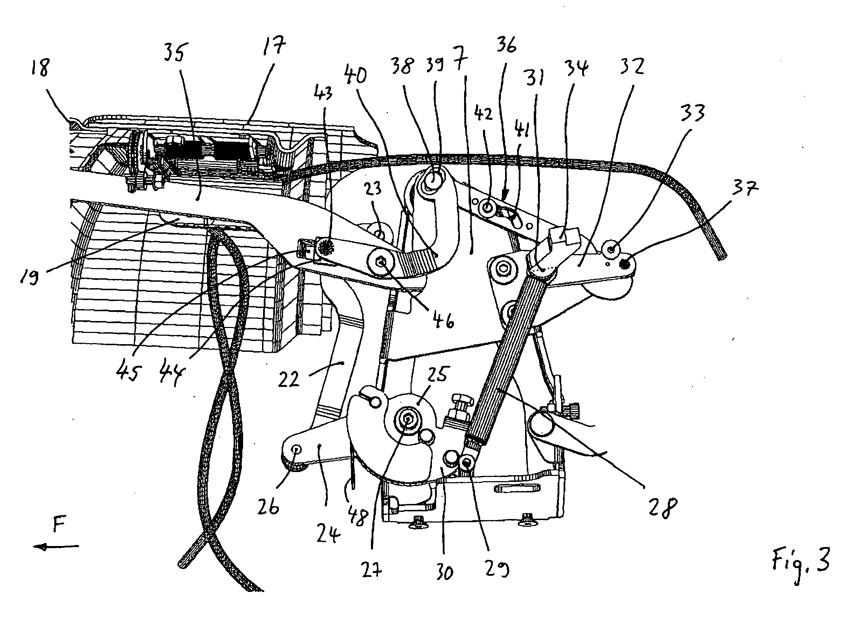

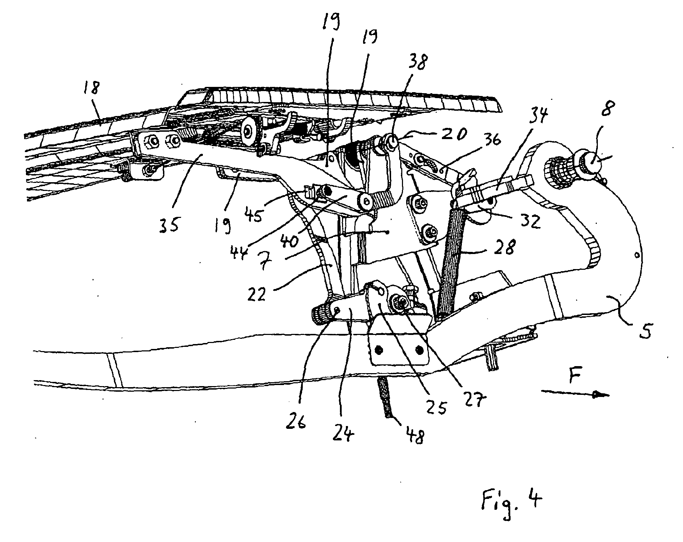

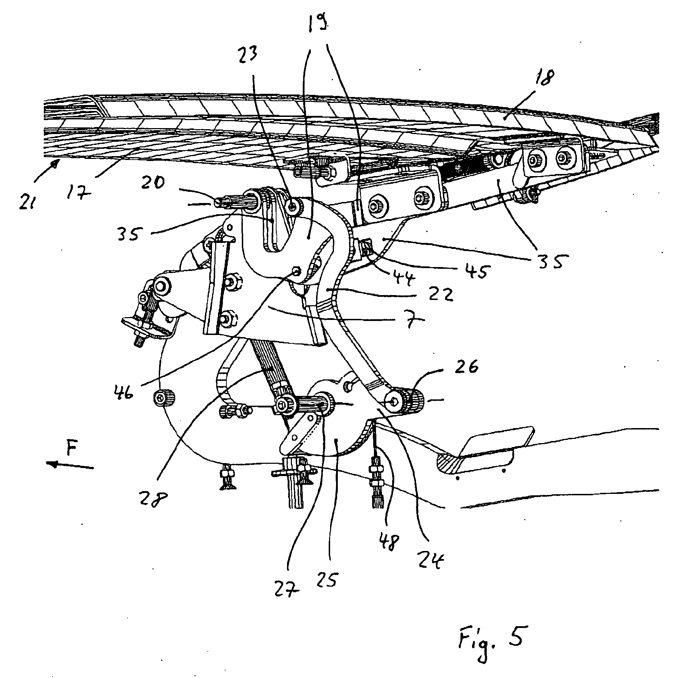

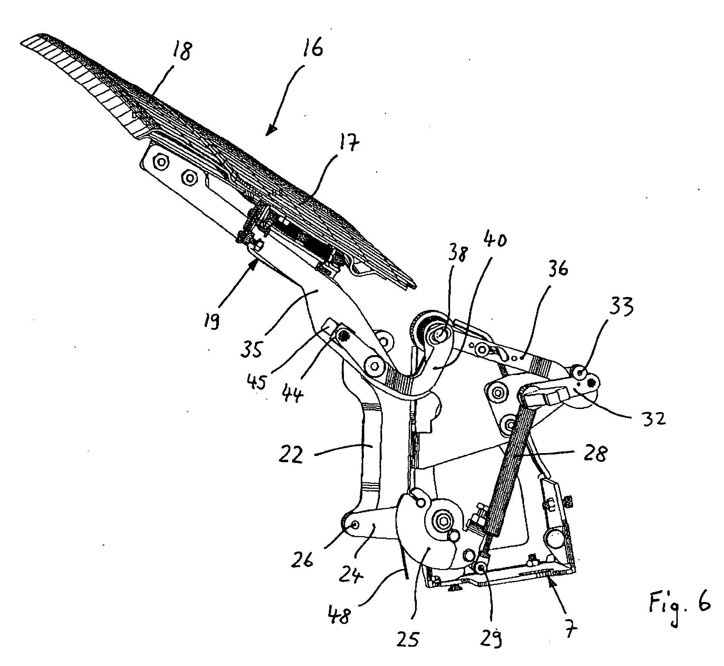

Die Hutablage 16 weist ein vorderes Abdeckteil 17 und ein hinteres Abdeckteil 18 auf. Das vordere Abdeckteil 17 ist beidseits jeweils an einem Lagerhebel 19 angebracht (siehe Fig. 3 bis 5, der Pfeil F zeigt in Richtung der Fahrzeuglängsachse nach vorne in Fahrtrichtung), der um eine am Hauptlager 7 ortsfeste Schwenkachse 20 schwenkbar gelagert ist, so dass das vordere Abdeckteil 17 zwischen seiner Abdeckstellung (siehe z. B. die Fig. 1, 3 und 5) und seiner hochgeschwenkten Offenstellung (siehe z. B. Fig. 6 bis 8) verschwenkbar ist. Die Schwenkachse 20 ist z. B. in etwa im Bereich des Vorderrandes 21 des vorderen Abdeckteils 17 angeordnet. Ein ein Bauteil einer Betätigungseinrichtung des vorderen Abdeckteils 17 bildender Antriebslenker 22 ist einerseits an dem Lagerhebel 19 in einem von der Schwenkachse 20 beabstandeten Gelenk 23 und andererseits an einem ersten Arm 24 eines Übersetzungshebels 25 in einem Gelenk 26 angelenkt. Der Übersetzungshebel 25 ist am Hauptlager 7 (nicht vollständig dargestellt) um eine Schwenkachse 27 schwenkbar gelagert. Eine Gasdruckfeder 28 ist einerseits in einem Gelenk 29 an einem zweiten Arm 30 des Übersetzungshebels 25 und andererseits in einem Gelenk 31 an einem Antriebslenker 32 angelenkt, der am Hauptlager 7 um eine Schwenkachse 33 schwenkbar gelagert ist. Ein mit dem Antriebslenker 32 fest verbundener Verbindungslenker 34 ist mit dem Hauptlenker 5 derart verbunden, dass er mit dem verschwenkenden Hauptlenker 5 eine Schwenkbewegung ausführt. Die Schwenkachse 8 des Hauptlenkers 5 und die Schwenkachse 33 des Antriebslenkers 32 sind insbesondere koaxial angeordnet.

Das hintere Abdeckteil 18 ist, entsprechend dem vorderen Abdeckteil 17, beidseits jeweils an einem Lagerhebel 35 angebracht (siehe z. B. Fig. 3 bis 6), der insbesondere um die Schwenkachse 20 schwenkbar gelagert ist, so dass auch das hintere Abdeckteil 18 zwischen seiner Abdeckstellung (siehe Fig. 3 bis 5) und seiner hochgeschwenkten Offenstellung (Fig. 6 bis 8) verschwenkbar ist.

Eine Verstelleinrichtung für das hintere Abdeckteil 18 enthält einen Steuerhebel 36, der an einem Ende mit dem Antriebslenker 32 in einem benachbart zu der Schwenkachse 33 angeordneten Gelenk 37 schwenkbar verbunden ist und an seinem anderen Ende einen seitlich abstehenden Steuerstift 38 aufweist, der in einem Langloch 39 eines Schwenkhebels 40 verschiebbar aufgenommen ist. Der Steuerhebel 36 enthält des weiteren zwischen seinen beiden Enden eine Kulisse 41, in der ein am Hauptlager 7 fest angebrachter Lagerstift 42 verschiebbar aufgenommen ist. Der Schwenkhebel 40 enthält an seinem Ende, das dem das Langloch 39 enthaltenden Ende gegenüber liegt, einen in einem Gelenk 43 gelagerten Gleiter oder Gleitstein 44, der in einem im Lagerhebel 35 des hinteren Abdeckteils 18 gebildeten Langloch 45 verschiebbar aufgenommen ist. Der Schwenkhebel 40 ist zwischen seinen beiden Enden mittels einer Achse 46, die sich durch eine Ausnehmung 47 im Lagerhebel 35 des hinteren Abdeckteils 18 erstreckt, mit dem Lagerhebel 19 des vorderen Abdeckteils 17 schwenkbar verbunden.

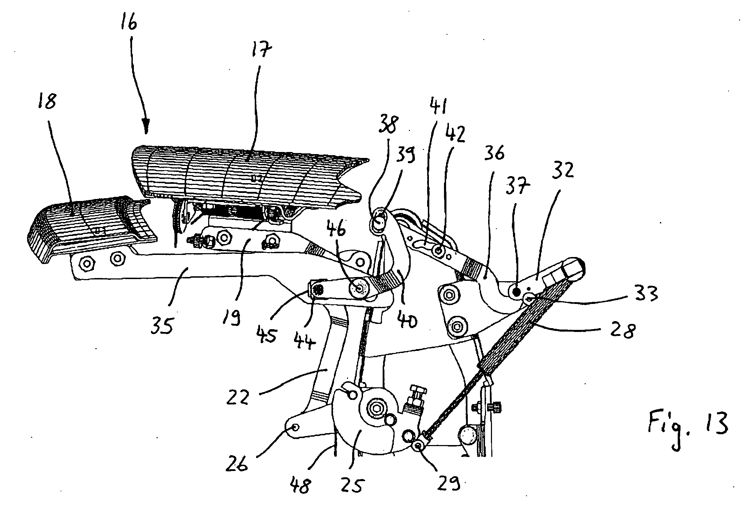

Anhand der Abfolge der Fig. 3 bis 13 wird der Bewegungsablauf der Hutablage 16 von ihrer Stellung bei abgelegtem Dach (Fig. 3 bis 5) bis zu ihrer Stellung bei geschlossenem Dach (Fig. 13) näher erläutert.

Bei geöffnetem abgelegtem Dach 1 (siehe Fig. 3 bis 5) sind das vordere und das hintere Abdeckteil 17 bzw. 18 in ihrer horizontalen Abdeckstellung in etwa bündig vor der Kofferraumklappe 14 angeordnet. Der herabgeschwenkte Hauptlenker 5 hält den Antriebslenker 32 und damit das obere Ende der Gasdruckfeder 28 in der dargestellten Position fest. Am Übersetzungshebel 25 ist gegenüberliegend zur Anlenkung 29 der Gasfeder 28 ein Seil 48 angebracht, das bei Zugbelastung gegen die Expansionskraft der Gasfeder 28 wirkt. Das Seil 48 ist mit der Kofferraumklappe 14 in ihrer Funktion als Verdeckkastendeckel, der mit seinem Vorderrand 15 zum Freigeben des Bewegungsweges des Daches 1 aufschwenkbar ist, direkt oder indirekt derart verbunden, dass bei geschlossener Kofferraumklappe 14 und abgelegtem Dach 1 das Seil 48 derart vorgespannt ist, dass es den Übersetzungshebel 25 in der dargestellten Schwenkstellung hält, in der die Gasdruckfeder 28 in ihre minimale Längenstellung verkürzt und vorgespannt ist.

Beim Öffnen und Hochschwenken der Kofferraumklappe 14 an ihrem Vorderrand wird das Seil 48 nachgelassen (siehe Zwischenstellung der Fig. 6), so dass die Gasdruckfeder 28 aufgrund ihrer Expansionskraft ausfährt und den Übersetzungshebel 25 im Uhrzeigersinn verschwenkt. Dabei wird über den aufwärts bewegten Antriebslenker 22 der Lagerhebel 19 des vorderen Abdeckteils 17 um die Schwenkachse 20 nach oben verschwenkt. Der Lagerhebel 35 des hinteren Abdeckteils 18 wird mittels des Schwenkhebels 40 um denselben Schwenkwinkel nach oben verschwenkt, da der Schwenkhebel 40 über die mit dem Lagerhebel 19 verbundene Achse 46 angehoben und um den Steuerstift 38 verschwenkt wird, der vom Steuerhebel 36 koaxial zur Schwenkachse 20 der beiden Lagerhebel 19 und 35 gehalten ist. Damit bleibt der Gleitstein 44 unverändert in seiner Position in dem Langloch 45, während er den Lagerhebel 35 synchron zum Lagerhebel 19 verschwenkt.

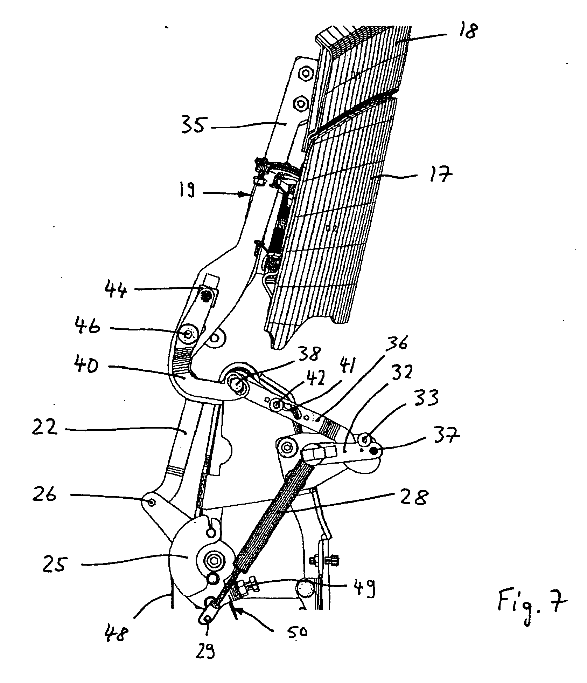

Das Seil 48 wird weiter nachgelassen und im weiteren Verlauf der voranstehend beschriebenen Bewegungen schwenkt die Gasdruckfeder 28 den Übersetzungshebel 25 und insbesondere eine am Übersetzungshebel 25 angeordnete Einstellschraube 49 gegen einen stationären Anschlag 50 (siehe Fig. 7). Die vordere und die hintere Abdeckung 17 bzw. 18 haben im gemeinsamen Verschwenken ihre maximal aufgeschwenkte Stellung erreicht.

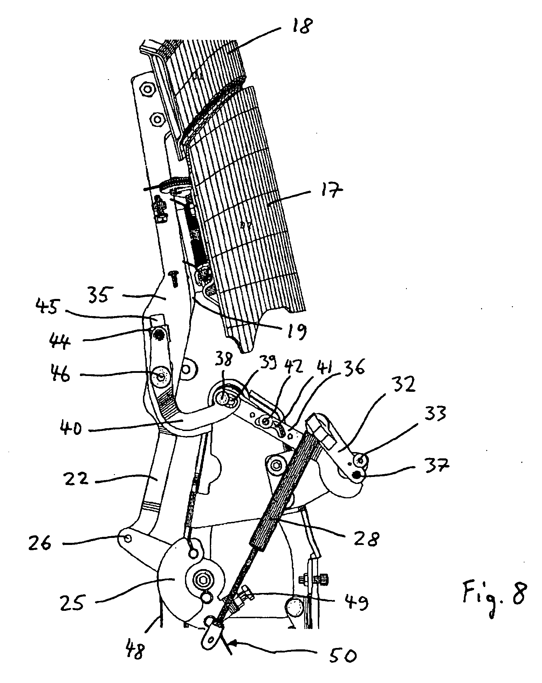

Durch Betätigen einer am Hauptlager 7 angeordneten Hydraulikzylindereinheit 51 (siehe Fig. 2) wird über ein Zwischengetriebe die Hauptsäule 6 in Schließrichtung verschwenkt. Dabei wird über das Hauptviergelenk auch der Hauptlenker 5 verschwenkt, der wiederum den Antriebslenker 32 aus seiner in Fig. 7 dargestellten Endstellung im Uhrzeigersinn verschwenkt. In der in Fig. 8 dargestellten Zwischenstellung hat die Gasdruckfeder 28 ihre maximale Länge erreicht und sie hat den Übersetzungshebel 25 aus seiner Anlage am Anschlag 50 wieder in Schließrichtung der Hutablage um einen kleinen Winkel zurückverschwenkt. Gleichzeitig hat das vordere Abdeckteil 17 über den Antrieb durch den Antriebslenker 22 und den Lagerhebel 19 seine erste Schließbewegung ausgeführt. Während seiner Schwenkbewegung hat der Antriebslenker 32 über das Gelenk 37 den Steuerhebel 36 relativ zum feststehenden Stift 42 derart verlagert, dass der Steuerstift 38 sich aus der Schwenkachse 20 herausbewegt hat und in dem Langloch 39 des Schwenkhebels 40, das in dieser Stellung in der Verschieberichtung ausgerichtet ist, eine Endstellung eingenommen hat. Durch diese gegenüber der Schwenkachse 20 exzentrische Anlenkung des Schwenkhebels 40 schwenkt dieser mittels des sich im Langloch 45 verlagernden Gleitsteins 44 den Lagerhebel 35 des hinteren Abdeckteils 18 um einen größeren Winkel im Vergleich zur Schwenkbewegung des Lagerhebels 19 des vorderen Abdeckteils 17. Das hintere Abdeckteil 18 eilt somit der Bewegung des vorderen Abdeckteils 17 voraus.

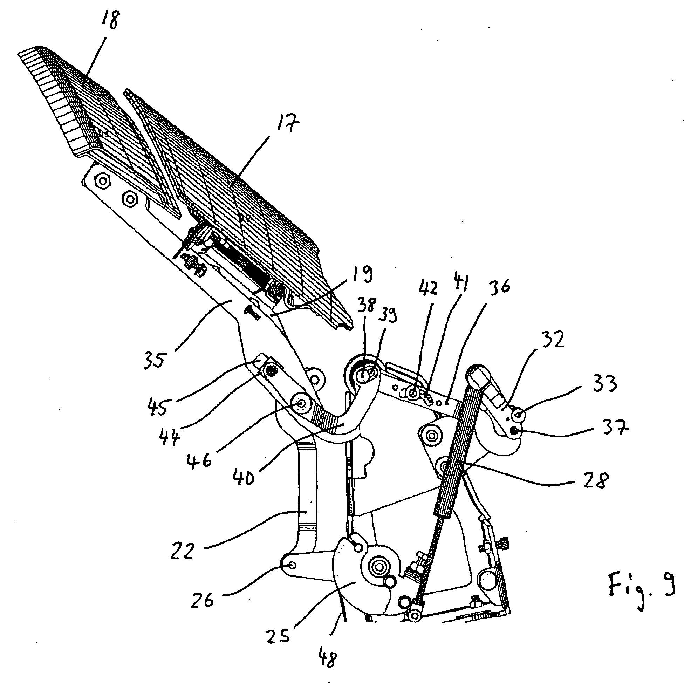

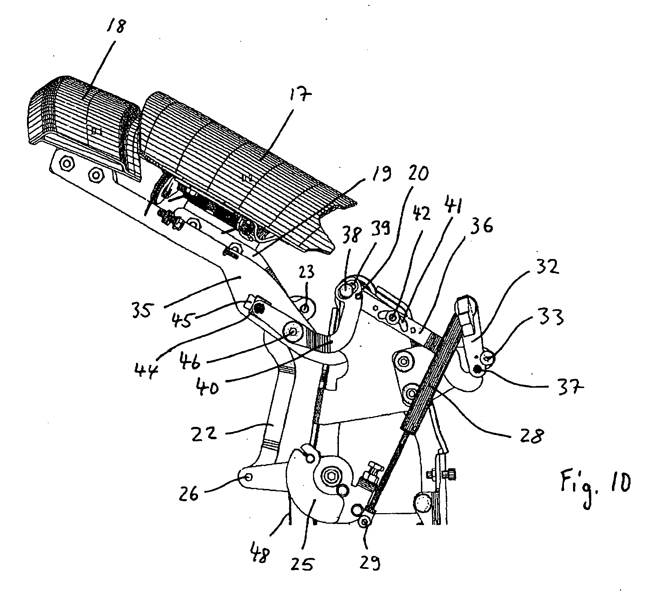

Das weitere Verschwenken des Antriebslenkers 22 (siehe die in den Fig. 9 und 10 dargestellten Zwischenstellungen) hat zur Folge, dass die maximal gelängte Gasdruckfeder 28 über das Verschwenken des Übersetzungshebels 25 das vordere Abdeckteil 17 absenkt und dass über die Verstelleinrichtung des hinteren Abdeckteils 18 dieses gegenüber dem vorderen Abdeckteil 17 schneller abgesenkt wird. Da der Steuerhebel 36 durch seine Anlenkung im Gelenk 37 an den Antriebslenker 32 eine Schwenkbewegung um den Stift 42 ausführt, die die Verlagerung des zum Gelenk 37 gegenüberliegenden Steuerstiftes 38 bewirkt, hat die Kulisse 41 des Steuerhebels 36 einen derart angepassten Kurvenverlauf, dass der Steuerstift 38 auf einer zum Verschwenken des Schwenkhebels 40 optimierten Kurvenbahn geführt ist. Durch den dargestellten Kurvenverlauf der Kulisse 41 des Steuerhebels 36 ist es möglich, das im Schwenkhebel 40 angebrachte Langloch 39 für die Ausgleichsbewegung des Steuerstiftes 38 kürzer zu gestalten. In Fig. 10 ist des weiteren zu erkennen, dass sich der Steuerstift 38 aus der einen Endstellung im Langloch 39 geringfügig entfernt hat, dass sich der Gleitstein 44 im Langloch 45 der gegenüberliegenden linken Endposition annähert und dass sich das hintere Abdeckteil 18 schon weiter vom vorderen Abdeckteil 17 entfernt hat.

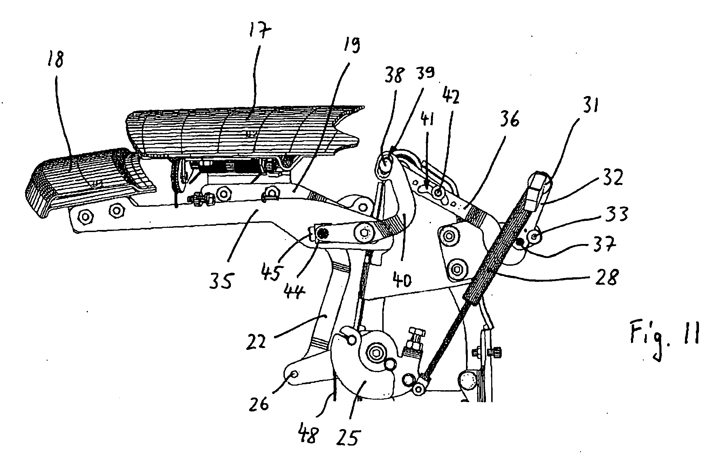

Bei der weiteren Ablagebewegung der Hutablage 16 eilt das hintere Abdeckteil 18 dem vorderen Abdeckteil 17 weiter voraus, wie der Darstellung der Fig. 11 zu entnehmen ist. Die maximal gelängte Gasdruckfeder 28 hat den Übersetzungshebel 25 im Gegenuhrzeigersinn bis nahe an seine Schwenkendstellung verschwenkt. Der Stift 42 bewegt sich weiter gegen das rechte Ende der Kulisse 41, während der Steuerstift 38 eine mittlere Stellung in dem Langloch 39 einnimmt und deutlich von der Schwenkachse 20 verlagert wird.

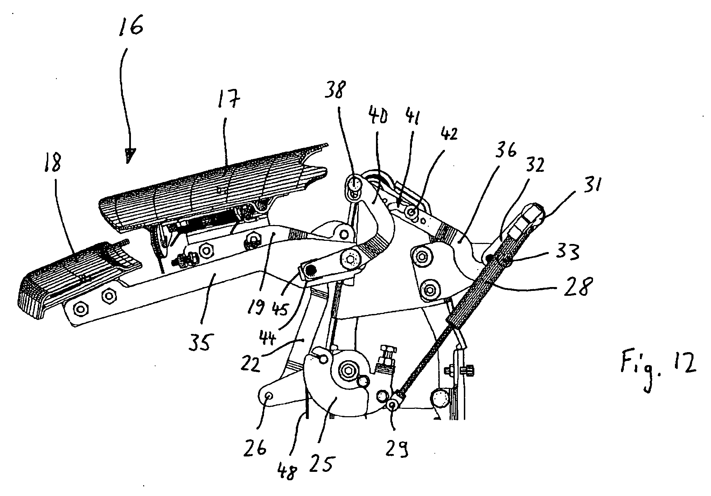

Das weitere Verschwenken des Hauptlenkers 5 führt zu einer Stellung der Hutablage 16 gemäß Fig. 12, in der sich die Gasdruckfeder 28 durch eine Totpunktstellung bezüglich der Schwenkachse 33 bewegt und dabei den Übersetzungshebel 25 im Gegenuhrzeigersinn bis in seine Schwenkendstellung verschwenkt hat. Damit sind das vordere Abdeckteil 17 wie auch das hintere Abdeckteil 18 in ihre jeweils untersten Schwenkstellungen verschwenkt, die es ermöglichen, dass das Dach 1 bzw. das hintere Dachteil 3 mit seinem Hinter- oder Unterrand bzw. einem daran angeordneten Querträger aus dem Verdeckablageraum nach oben und über die beiden Abdeckteile 17 und 18 hinweg ausfährt.

Während der letzten Bewegung des Hauptlenkers 5, die das Dach 1 in seine Schließstellung über dem Fahrzeuginnenraum verstellt, nimmt die Hutablage 16 die in Fig. 13 dargestellte Abdeckstellung ein. Der Hauptlenker 5 hat den Antriebslenker 32 in seine Endstellung verschwenkt und die Gasdruckfeder 28 über die Totpunktstellung hinaus bewegt. Die maximal gelängte Gasdruckfeder 28, deren Federkraft größer ist wie die von der Hutablage 16 am Übersetzungshebel 25 aufgebrachte Gegenkraft, hat den Übersetzungshebel 25 gegenüber der Stellung der Fig. 12 geringfügig zurückgeschwenkt, so dass das vordere Abdeckteil 17 über den Antriebslenker 22 in seine Endstellung gegen die Unterseite des hinteren Dachteils 3 angehoben worden ist. Der Antriebslenker 32 hat des weiteren den Steuerhebel 36 relativ zum Stift 42 derart verschoben, dass dieser an dem der Gasdruckfeder 28 zugewandten Ende der Kulisse 41 angeordnet ist. Die von der Schwenkachse 20 noch weiter abweichende Position des Steuerstiftes 38 hält den Schwenkhebel 40 derart um die Achse 46 verschwenkt, dass der Gleitstein 44 den Lagerhebel 35 in einer gegenüber der Stellung der Fig. 11 tiefer liegenden Endstellung anordnet, in der sich das hintere Abdeckteil 17 unter dem Hinter- oder Unterrand bzw. dem Querträger des hinteren Dachteils 3 befindet.

Das Seil 48, das bei dem beschriebenen Verstellvorgang und der hochgeschwenkten Kofferraumklappe 14 ausreichend nachgelassen worden ist, so dass der Übersetzungshebel 25 unbehindert verschwenkt werden konnte, wird beim abschließenden Absenken und Schließen der Kofferraumklappe 14 wieder spielfrei gespannt.

Zum Öffnen und Ablegen des Daches 1 wird die Kofferraumklappe 14 an ihrem Vorderrand hochgeschwenkt, wobei gleichzeitig über eine Zugverlagerung des Seils 48 der Übersetzungshebel 25 gegen die Kraft der Gasdruckfeder 28 und diese verkürzend gegen den Uhrzeigersinn von der Stellung der Fig. 13 in die Stellung der Fig. 12 verschwenkt wird.

Nach oder noch während dieser Bewegung beginnt das Verschwenken des Hauptlenkers 5 und damit des Antriebslenkers 32 aus der Stellung gemäß Fig. 13 entgegen der voranstehend beschriebenen Richtung zurück bis in die Stellung der Fig. 7, wobei das Seil 48 nachgelassen wird, um das Zurückschwenken des Übersetzungshebels 25 gegen den Anschlag 50 zu ermöglichen. Die Gasdruckfeder 28 passt sich dabei in ihrer Länge den vorliegenden Kräfteverhältnissen an. Bei der Bewegung der Hutablage 16 aus der Stellung der Fig. 7 zurück in die Stellung gemäß den Fig. 3 bis 5 wird durch Zugverlagerung des Seils 48 der Übersetzungshebel 25 bei ruhendem Steuerhebel 32 in seine Ausgangsstellung zurückgeschwenkt. Das Seil 48 kann von der sich schließenden Kofferraumklappe 14 oder von einem eigenen Antrieb in der gewünschten Weise verlagert werden. Zur Gewichtsentlastung der beiden Abdeckteile 17 und 18 können entsprechende Federeinrichtungen vorgesehen sein.

### Bezugszeichenliste

- 1: Hardtop-Dach
- 2: vorderes Dachteil
- 3: hinteres Dachteil
- 4: Verdeckkasten
- 5: Hauptlenker
- 6: Hauptsäule
- 7: Hauptlager
- 8: Schwenkachse
- 9: Schwenkachse
- 10: Trägerteil
- 11: Schwenkachse
- 12: Schwenkachse
- 13: Heckscheibe
- 14: Kofferraumklappe
- 15: Vorderrand
- 16: Hutablage
- 17: vorderes Abdeckteil
- 18: hinteres Abdeckteil
- 19: Lagerhebel
- 20: Schwenkachse
- 21: Vorderrand
- 22: Antriebslenker
- 23: Gelenk
- 24: erster Arm
- 25: Übersetzungshebel
- 26: Gelenk

- 27: Schwenkachse
- 28: Gasdruckfeder
- 29: Gelenk
- 30: zweiter Arm
- 31: Gelenk
- 32: Antriebslenker
- 33: Schwenkachse
- 34: Verbindungslenker
- 35: Lagerhebel
- 36: Steuerhebel
- 37: Gelenk
- 38: Steuerstift
- 39: Langloch
- 40: Schwenkhebel
- 41: Kulisse
- 42: Stift
- 43: Gelenk
- 44: Gleitstein
- 45: Langloch
- 46: Achse
- 47: Ausnehmung
- 48: Seil
- 49: Einstellschraube
- 50: Anschlag
- 51: Hydraulikzylindereinheit

## Patentansprüche

1. Hutablage eines Cabriolets mit einem umwandelbaren Dach (1), das in einen rückwärtigen Ablageraum (4) des Cabriolets absenkbar ist, wobei die Hutablage (16) ein vorderes Abdeckteil (17) und ein hinteres Abdeckteil (18) aufweist, die zwischen einer Abdeckstellung und einer Zwischenstellung beim Ein- und Ausschwenken des Daches (1) verschwenkbar sind, und das hintere Abdeckteil (18) der Hutablage (16) um eine fahrzeugfeste Schwenkachse (20) verschwenkbar gelagert ist,
**dadurch gekennzeichnet,**
**dass** das vordere Abdeckteil (17) um eine fahrzeugfeste Schwenkachse (20) verschwenkbar gelagert ist und
**dass** das vordere Abdeckteil (17) und das hintere Abdeckteil (18) mittels jeweiliger Lagerarme (19 bzw. 35) um ihre jeweilige fahrzeugfeste Schwenkachse verschwenkbar gelagert sind.

2. Hutablage nach Anspruch 1,
**dadurch gekennzeichnet, dass** bei geöffnetem und abgesenktem Dach (1) das vordere und das hintere Abdeckteil (17 bzw. 18) eine niveaugleiche Abdeckung bilden und dass bei geschlossenem Dach (1) das vordere Abdeckteil (17) eine Abdeckung als Hutablage bildet und das hintere Abdeckteil (18) eine gegenüber dem vorderen Abdeckteil (17) abgesenkte Schwenkstellung einnimmt.

3. Hutablage nach Anspruch 2,
**dadurch gekennzeichnet, dass** das hintere Abdeckteil (18) seine abgesenkte Schwenkstellung unterhalb eines Hinterrandes des Daches (3) einnimmt.

4. Hutablage nach Anspruch 2 oder 3,
**dadurch gekennzeichnet, dass** das vordere Abdeckteil (17) um eine fahrzeugfeste Schwenkachse (20) verschwenkbar gelagert ist und/oder dass das hintere Abdeckteil (18) um eine fahrzeugfeste Schwenkachse (20) verschwenkbar gelagert ist.

5. Hutablage nach einem der Ansprüche 1 bis 4,
**dadurch gekennzeichnet, dass** das vordere Abdeckteil (17) und das hintere Abdeckteil (18) um eine gemeinsame fahrzeugfeste Schwenkachse (20) verschwenkbar gelagert sind.

6. Hutablage nach einem der Ansprüche 2 bis 5,
**dadurch gekennzeichnet, dass** das vordere Abdeckteil (17) und das hintere Abdeckteil (18) mittels jeweiliger Lagerarme (19 bzw. 35) um ihre jeweilige Schwenkachse bzw. um die gemeinsame Schwenkachse (20) verschwenkbar gelagert sind.

7. Hutablage nach einem der Ansprüche 1 bis 6,
**dadurch gekennzeichnet, dass** das vordere Abdeckteil (17) mittels einer Betätigungseinrichtung (25, 28, 32) verstellbar ist und dass das hintere Abdeckteil (18) mittels einer Verstelleinrichtung verstellbar ist, die an die Betätigungseinrichtung angekoppelt und von dieser gesteuert ist.

8. Hutablage nach Anspruch 7,
**dadurch gekennzeichnet, dass** ein Schwenkhebel (40) der Verstelleinrichtung am vorderen Abdeckteil (17) oder dessen Lagerarm (19) in einem Gelenk (46) schwenkbar gelagert ist, mit einem Ende am hinteren Abdeckteil (18) oder dessen Lagerarm (35) in einem Stelleingriff ist und an seinem bezüglich des Gelenks (46) anderen Ende um eine verlagerbare Schwenkachse (38) bewegbar ist.

9. Hutablage nach Anspruch 8,
**dadurch gekennzeichnet, dass** der Stelleingriff des Schwenkhebels (40) mittels eines am Schwenkhebel (40) gelagerten Gleiters (44) erfolgt, der an einer am Lagerarm (35) vorgesehenen Führung (45) verschiebbar aufgenommen ist.

10. Hutablage nach Anspruch 8 oder 9,
**dadurch gekennzeichnet, dass** die beiden Abdeckteile (17 und 18)
- bei koaxialer Anordnung der verlagerbaren Schwenkachse (38) des Schwenkhebels (40) zur gemeinsamen Schwenkachse (20) der beiden Abdeckteile (17 und 18) übereinstimmende Schwenkbewegungen ausführen und
- bei nicht koaxialer Anordnung der verlagerbaren Schwenkachse (38) des Schwenkhebels (40) zur gemeinsamen Schwenkachse (20) der beiden Abdeckteile (17 und 18) unterschiedliche Schwenkbewegungen ausführen.

11. Hutablage nach einem der Ansprüche 8 bis 10,
**dadurch gekennzeichnet, dass** die verlagerbare Schwenkachse (38) an einem Steuerhebel (36) gebildet ist, der mittels eines an einer Steuerkulisse (41) des Steuerhebels (36) verschiebbar aufgenommenen ortsfesten Lagerteils (42) bewegbar gelagert und mit einem Schwenkantriebsteil (32) der Betätigungseinrichtung gekoppelt und von diesem verstellbar ist.

12. Hutablage nach einem der Ansprüche 7 bis 11,
**dadurch gekennzeichnet, dass** die Betätigungseinrichtung einen um eine ortsfeste Schwenkachse (27) schwenkbar gelagerten Übersetzungshebel (25) aufweist, der einerseits mit dem vorderen Abdeckteil (17) und andererseits über ein insbesondere längenveränderbares Element (28) mit dem Schwenkantriebsteil (32) der Betätigungseinrichtung verbunden ist.

13. Hutablage nach Anspruch 12,
**dadurch gekennzeichnet, dass** das Schwenkantriebsteil (32) der Betätigungseinrichtung mit einem das Dach (1) bewegbar lagernden Lenker (5) zum gemeinsamen Verschwenken verbunden ist.

14. Hutablage nach Anspruch 12 oder 13,
**dadurch gekennzeichnet, dass** das längenveränderbare Element ein Federelement und insbesondere eine Gasdruckfeder (28) ist.

## Claims

1. Rear shelf for a cabriolet having a convertible roof (1) which can be lowered into a rear storage space (4) of the cabriolet, wherein the rear shelf (16) has a front covering part (17) and a rear covering part (18) which can be pivoted between a covering position and an intermediate position as the roof (1) is pivoted in and out, and the rear covering part (18) of the rear shelf (16) is mounted pivotably about a pivot spindle (20) mounted on the vehicle, **characterized in that** the front covering part (17) is mounted pivotably about a pivot spindle (20) mounted on the vehicle, and **in that** the front covering part (17) and the rear covering part (18) are mounted pivotably by means of respective bearing arms (19 and 35) about their respective pivot spindel mounted on the vehicle.

2. Rear shelf according to Claim 1, **characterized in that,** when the roof (1) is open and lowered, the front and the rear covering parts (17 and 18) form a level covering, and **in that**, when the roof (1) is closed, the front covering part (17) forms a covering in the form of a rear shelf and the rear covering part (18) takes up a lowered pivoted position in relation to the front covering part (17).

3. Rear shelf according to Claim 2, **characterized in that** the rear covering part (18) takes up its lowered pivoted position below a rear edge of the roof (3).

4. Rear shelf according to Claim 2 or 3,
**characterized in that** the front covering part (17) is mounted pivotably about a pivot spindle (20) mounted on the vehicle, and/or **in that** the rear covering part (18) is mounted pivotably about a pivot spindle (20) mounted on the vehicle.

5. Rear shelf according to one of Claims 1 to 4, **characterized in that** the front covering part (17) and the rear covering part (18) are mounted pivotably about a common pivot spindle (20) mounted on the vehicle.

6. Rear shelf according to one of Claims 2 to 5, **characterized in that** the front covering part (17) and the rear covering part (18) are mounted pivotably by means of respective bearing arms (19 and 35) about their respective spindle or about the common pivot spindle (20).

7. Rear shelf according to one of Claims 1 to 6, **characterized in that** the front covering part (17) is adjustable by means of an actuating device (25, 28, 32), and **in that** the rear covering part (18) is adjustable by means of an adjusting device which is coupled to the actuating device and is controlled thereby.

8. Rear shelf according to Claim 7, **characterized in that** a pivot lever (40) of the adjusting device is mounted pivotably on the front covering part (17) or on its bearing arm (19) in a joint (46), with one end in a control intervention on the rear covering part (18) or its bearing arm (35) and, at its other end with respect to the joint (46), is movable about a displaceable pivot spindle (38).

9. Rear shelf according to Claim 8, **characterized in that** the control intervention of the pivot lever (40) takes place by means of a slider (44) which is mounted on the pivot lever (40) and is held displaceably on a guide (45) provided on the bearing arm (35).

10. Rear shelf according to Claim 8 or 9,
**characterized in that** the two covering parts (17 and 18)
- execute corresponding pivoting movements when the displaceable pivot spindle (38) of the pivot lever (40) is arranged coaxially with respect to the common pivot spindle (20) of the two covering parts (17 and 18), and
- execute different pivoting movements when the displaceable pivot spindle (38) of the pivot lever (40) is not arranged coaxially with respect to the common pivot spindle (20) of the two covering parts (17 and 18).

11. Rear shelf according to one of Claims 8 to 10, **characterized in that** the displaceable pivot spindle (38) is formed on a control lever (36) which is mounted movably by means of a positionally fixed bearing part (42) held displaceably at a control slot (41) of the control lever (36), and is coupled to a pivoting drive part (32) of the actuating device and can be adjusted by said pivoting drive part.

12. Rear shelf according to one of Claims 7 to 11,
**characterized in that** the actuating device has a transmission lever (25) which is mounted pivotably about a positionally fixed pivot spindle (27) and is connected at one end to the front covering part (17) and at the other end via an in particular length-changeable element (28) to the pivoting drive part (32) of the actuating device.

13. Rear shelf according to Claim 12, **characterized in that** the pivoting drive part (32) of the actuating device is connected to a link (5), which movably supports the roof (1), for joint pivoting.

14. Rear shelf according to Claim 12 or 13,
**characterized in that** the length-changeable element is a spring element and in particular is a gas-filled compression spring (28).

## Revendications

1. Plage arrière pour cabriolet avec un toit (1) amovible pouvant être abaissé dans un espace de rangement (4) arrière du cabriolet, la plage arrière (16) comportant une partie de recouvrement (17) avant et une partie de recouvrement (18) arrière pouvant pivoter entre une position de recouvrement et une position intermédiaire lors du mouvement de pivotement entrant et sortant du toit (1) et la partie de recouvrement arrière (18) de la plage arrière (16) étant disposée de façon à pouvoir pivoter autour d'un axe de pivotement (20) fixe par rapport au véhicule ;
**caractérisée en ce que :**
la partie de recouvrement (17) avant est disposée de façon à pivoter autour d'un axe de pivotement (20) fixe par rapport au véhicule ; et
la partie de recouvrement (17) avant et la partie de recouvrement (18) arrière sont disposées de façon à pouvoir pivoter autour de leur axe de pivotement fixe par rapport au véhicule respectif à l'aide de bras de support (19 et/ou 35) respectifs.

2. Plage arrière selon la revendication 1,
**caractérisée en ce que** lorsque le toit est ouvert et rabattu (1), les parties de recouvrement (17 et/ou 18) avant et arrière forment un recouvrement de même niveau et que lorsque le toit (1) est fermé, la partie de recouvrement (17) avant forme un recouvrement prenant la forme de la plage arrière et la partie de recouvrement (18) arrière prend une position pivotée abaissée par rapport à la partie de recouvrement (17) avant.

3. Plage arrière selon la revendication 2,
**caractérisée en ce que** la partie de recouvrement (18) arrière prend sa position pivotée abaissée en dessous d'un bord arrière du toit (3).

4. Plage arrière selon la revendication 2 ou 3, **caractérisée en ce que** la partie de recouvrement (17) avant est disposée de façon à pivoter autour d'un axe de pivotement (20) fixe par rapport au véhicule et/ou que la partie de recouvrement (18) arrière est disposée de façon à pivoter autour d'un axe de pivotement (20) fixe par rapport au véhicule.

5. Plage arrière selon l'une quelconque des revendications 1 à 4, **caractérisée en ce que** la partie de recouvrement (17) avant et la partie de recouvrement (18) arrière sont disposées de façon à pivoter autour d'un axe de pivotement (20) commun fixe par rapport au véhicule.

6. Plage arrière selon l'une quelconque des revendications 2 à 5, **caractérisée en ce que** la partie de recouvrement (17) avant et la partie de recouvrement (18) arrière sont disposées de façon à pivoter autour de leur axe de pivotement respectif et/ou autour de l'axe de pivotement (20) commun à l'aide de leurs bras de support (19 et/ou 35) respectifs.

7. Plage arrière selon l'une quelconque des revendications 1 à 6, **caractérisée en ce que** la partie de recouvrement (17) avant peut être déplacée à l'aide d'un dispositif d'actionnement (25, 28, 32) et que la partie de recouvrement (18) arrière peut être déplacée à l'aide d'un dispositif de déplacement couplé au dispositif d'actionnement et commandé par lui.

8. Plage arrière selon la revendication 7,
**caractérisée en ce qu'**un levier pivotant (40) du dispositif de déplacement est disposé de façon à pouvoir pivoter au niveau de la partie de recouvrement (17) avant ou de son bras de support (19) dans une articulation (46), avec une extrémité au niveau de la partie de recouvrement arrière (18) ou de son bras de support (35) dans un engrènement de réglage et pouvant se déplacer autour d'un axe de pivotement (38) mobile par rapport à son autre extrémité par rapport à l'articulation (46).

9. Plage arrière selon la revendication 8,
**caractérisée en ce que** l'engrènement de réglage du levier pivotant (40) est réalisé au moyen d'un coulisseau (44) disposé au niveau du levier pivotant (40), ledit coulisseau étant reçu de façon mobile au niveau d'un guide (45) prévu au niveau du bras de support (35).

10. Plage arrière selon la revendication 8 ou 9, **caractérisée en ce que** les deux parties de recouvrement (17 et 18) :
- réalisent des mouvements de pivotement concordants en cas d'agencement coaxial de l'axe de pivotement (38) mobile du levier pivotant (40) en direction de l'axe de pivotement (20) commun des deux parties de recouvrement (17 et 18) ; et
- réalisent des mouvements de pivotement différents en cas d'agencement coaxial de l'axe de pivotement (38) mobile du levier pivotant (40) en direction de l'axe de pivotement (20) commun des deux parties de recouvrement (17 et 18).

11. Plage arrière selon l'une quelconque des revendications 8 à 10, **caractérisée en ce que** l'axe de pivotement (38) mobile est réalisé au niveau d'un levier de commande (36) disposé de façon mobile à l'aide d'une partie de palier (42) fixe logée de façon coulissante au niveau d'une coulisse de commande (41) du levier de commande (36) et couplée à une partie d'entraînement par pivotement (32) du dispositif d'actionnement et déplaçable avec celle-ci.

12. Plage arrière selon l'une quelconque des revendications 7 à 11, **caractérisée en ce que** le dispositif d'actionnement comporte un levier de démultiplication (25) disposé de façon fixe et pivotante autour d'un axe de pivotement (27), ledit levier étant relié d'une part à la partie de recouvrement (17) avant et d'autre part à la partie d'entraînement en pivotement (32) du dispositif d'actionnement par l'intermédiaire d'un élément (28) notamment modulable en longueur.

13. Plage arrière selon la revendication 12,
**caractérisée en ce que** la partie d'entraînement en pivotement (32) du dispositif d'actionnement est reliée à un bras de liaison (5) logeant de façon mobile le toit (1) afin de les faire pivoter ensemble.

14. Plage arrière selon la revendication 12 ou 13, **caractérisée en ce que** l'élément modulable en longueur est un élément de ressort et notamment un ressort pneumatique (28).
